# EUROPEAN PATENT SPECIFICATION

(11) **EP 2 877 321 B1**
(45) Date of publication and mention of the grant of the patent: **14.09.2016**
(21) Application number: 13742701.9
(22) Date of filing: 24.07.2013
(51) Int. Cl.: B24B 41/06, B23Q 3/154, B24B 31/00

(54) **COIN BILLET OR COINING DIE HOLDER**
MÜNZROHLING ODER MÜNZSTOCKHALTER
SUPPORT DE BILLETTE À FRAPPER OU DE MATRICE DE FRAPPE

(30) Priority: 24.07.2012 GB 201213098
(43) Date of publication of application: 03.06.2015
(73) Proprietor: The Royal Mint Limited, Llantrisant Pontyclun Mid Glamorgan CF72 8YT (GB)
(72) Inventor: COOK, Geraint, Pontyclun Mid Glamorgan CF72 8YT (GB)
(74) Representative: Rogers, Alex Lee
(86) International application number: PCT/GB2013/051975
(87) International publication number: WO 2014/016592

(56) References cited:
- US-A- 3 320 564
- US-A1- 2010 288 398
- US-A1- 2011 117 820

## Description

The invention relates to a coin billet or coining die holder for a polishing machine.

Coins and medals are manufactured by a stamping process commonly referred to as coining. In coining, a metal disc, otherwise known as a coin blank, is struck between two opposing coining dies to form an image on the obverse and reverse sides of the coin blank. The edge of the coin may then be rolled over a further die so as to form a pattern on the edge, sometimes referred to as the third side, of the coin.

In order to form the pattern on the coin blank, each coining die is provided with an inverse image of the image to be applied to the coin. Coining dies are typically manufactured as follows. A substantially cylindrical positive reduction punch is CNC machined and any incomplete features are corrected by a skilled craftsman. The reduction punch is then pressed into a substantially cylindrical metal billet, that has been polished by hand, so as to create a negative matrix punch. The negative matrix punch is pressed into another hand-polished metal billet to create a positive working punch. Using this final positive working punch, many negative coining dies can be manufactured by pressing the working punch into a hand-polished metal billet.

The coining die is then used to strike a large number of coins. After a period of time, the coining die becomes worn and is therefore retired and destroyed. A new coining die created from the same working punch is then used to continue the coin striking process. It will be appreciated that whilst there are many coining dies, there is only a single working punch used to create all of the coining dies. This ensures that every working die creates exactly the same image on a coin.

It is desirable to prolong the life of a coining die as there is a cost and time implication in replacing an old coining die for a new coining die. Hand-polishing a coining die provides a key for the wear resistant coatings used to prolong its life, and also ensures that it creates an image of high-quality and high-definition on a coin blank. However, hand-polishing must be carried out by skilled craftsmen using fine tools so as to ensure that the incuse image on the coining die is not compromised. This is both expensive and time-consuming and carrying out this detailed work over prolonged periods of time may result in repetitive strain injuries.

In the applicant's co-pending application of the same priority date, a method of manufacturing a coining die is described in which the machined blank coin billet and the coining die are polished by moving them in an abrasive medium using a robotic arm. However, conventional robotic arms are not suitable for moving a coin billet or a coining die within an abrasive medium as the robotic arm itself may be abraded.

It is therefore desirable to provide a holder for a robotic arm for attaching a coin billet or coining die to a robotic arm.

US 3,320,564 discloses a magnetic chuck in combination with a removing means for removing parts therefrom.

US 2011/0117820 discloses a fixture for retaining a metal workpiece for contact by finishing media during operation of a media based finishing operation. The fixture comprises a body and a magnet for retaining the workpiece in contact with the body. By use of super-magnetic materials a significant holding force may be achieved.

The invention is defined in the attached independent claims to which reference should now be made. Further, optional features are defined in the sub-claims appended thereto.

According to an aspect of the invention there is provided a coin billet or coining die holder for a robotic arm of a polishing machine for polishing a coining die or coin billet, the holder comprising: a base; a magnetic retainer which is arranged to magnetically retain a billet or die to the base; a detachable supporting sidewall extending away from the base in an axial direction and arranged to at least partially surround the outer surface of a billet or die retained to the base by the magnetic retainer so as to restrict or prevent lateral movement of the billet or die with respect to the base. Lateral movement may be restricted or prevented in all directions. In use, the magnetic retainer retains a billet or die to the base and the sidewall prevents the billet or die from sliding or falling from the base. The axial height of the sidewall is sufficient to prevent lateral movement. The billet or die is attached to the robotic arm of the polishing machine by means of the holder and the robotic arm moves the billet or die and the holder within an abrasive medium so as polish the billet or die. During such a process, the abrasive medium may abrade the holder as well as polishing the billet or die.

The coin billet or coining die may be substantially cylindrical.

The supporting sidewall may be arranged to completely surround the outer surface of a billet or die retained to the base by the magnetic retainer. The supporting sidewall may restrict lateral movement of the billet or die in all directions. For example, if the billet is cylindrical, the supporting sidewall may comprise three arcuate portions of 60°having a radius slightly larger than that of the die. Collectively, the three arcuate portions would completely surround the outer surface of the billet and would prevent lateral movement in all directions. The supporting sidewall may form a closed loop. The supporting sidewall may be substantially annular. The supporting sidewall may be discontinuous, and may therefore comprise multiple portions.

The holder may further comprise a retaining surface against which in use a planar surface of the billet or die is retained. The retaining surface may be part of the base or may be another part of the holder. The retaining surface may be planar.

The supporting sidewall is detachably attached to the base. The supporting sidewall may be detachable in a single component or in multiple components. This allows the sidewall to be replaced. For example, if the holder is moved in an abrasive medium by the robotic arm the sidewall may be abraded. If the sidewall wears down then it may no longer sufficiently prevent lateral movement of a retained billet or die. Replacing the sidewall allows the same magnetic retainer to be used, thereby minimising costs.

The holder may further comprise at least one replaceable element comprising the supporting sidewall. There may be a single replaceable element or multiple elements. The or each replaceable element may be detachably attached to the base. The or each replaceable element may be attached by means of one or more screws. The or each replaceable element may further comprise a retaining surface against which in use a planar surface of the billet or die is retained. The retaining surface may be planar, may be within the sidewall, and may be annular. The replaceable element may comprise a ring having a central opening.

The supporting sidewall may comprise hardened steel.

The magnetic retainer may be attached to the base. The magnetic retainer may be incorporated into the base. The magnetic retainer may be a permanent or an electromagnet.

The holder may further comprise an attachment portion for attaching the holder to a robotic arm.

According to another aspect of the invention there is provided a polishing apparatus for polishing a coin billet or coining die, comprising: a robotic arm; a holder in accordance with any statement herein attached to the robotic arm; and a robotic controller configured to operate the robotic arm and comprising a processor and a storage medium containing instructions that when executed by the processor cause the robotic arm to move a coin billet or a coining die attached to the holder within an abrasive medium so as to polish the coin billet or the coining die.

According to an aspect of the invention there is provided a method of manufacturing a coining die comprising the steps of: (a) forming a blank billet; (b) polishing the blank billet by moving it in an abrasive medium; (c) pressing the polished blank billet with a working punch to form a coining die; and (d) polishing the coining die by moving it in an abrasive medium. Polishing the blank billet and coining die by moving them in abrasive mediums ensures that they are uniformly polished with ease. The abrasive mediums may be the same, but in other embodiments they may have differing abrasive properties. Further, polishing the blank billet to a high degree before pressing with a working punch provides a brighter better quality coining die.

Step (b) may comprise coarse polishing. Step (b) may comprise moving the blank billet in a coarse abrasive medium. Step (b) may comprise moving the blank billet in an abrasive medium with a robotic arm. Using a robotic arm improves the efficiency of the process and further ensures uniform polishing of the blank billet.

The method may further comprise attaching the blank billet to a holder of the robotic arm prior to polishing in step (b). The method may further comprise detaching the polished blank billet from the holder prior to pressing in step (c). The holder may be specifically adapted for retaining a blank billet securely and may be in accordance with any statement herein.

Step (d) may comprise fine polishing. Step (d) may comprise moving the coining die in a fine abrasive medium. The fine abrasive medium may be finer than the coarse abrasive medium used to polish the blank billet. Using a fine abrasive medium ensures that the definition of the impression formed on the coining die by the working punch is not unduly affected. If the abrasive medium used for polishing the coining die is too coarse then the impression formed on the coining die by the working punch may be abraded away. The or each different abrasive medium may be provided in a drum or barrel and may include a lubricant. The coarse abrasive medium may comprise abrasive plastic cones in a lubricant. The fine abrasive medium may be walnut shells in a lubricant.

Step (d) may comprise moving the coining die in an abrasive medium with a robotic arm. Once again, using a robotic arm improves the efficiency of the process and further ensures uniform polishing of the coining die. The use of a robotic arm also reduces the requirement for skilled craftsmen who may conventionally carry out polishing of dies by hand.

The method of manufacturing may further comprise attaching the coining die to a holder of the robotic arm prior to polishing in step (d). The method may further comprise detaching the polished coining die from the holder. The holder may be specifically adapted for retaining a coining die securely and may be in accordance with any statement herein.

The method may further comprise the step of annealing the polished blank billet formed in step (b) prior to pressing in step (c). Annealing the polished blank billet softens the metal which makes it easier to form an impression on the blank billet with the working punch.

The blank billet and coining die may be substantially cylindrical and may be made from a metal such as tool steel.

According to another aspect of the invention there is provided a method of coining a coin, comprising the steps of: (i) manufacturing a coining die in accordance with the method of any statement herein; and (ii) stamping a coin blank with the coining die.

According to yet another aspect of the invention there is provided a polishing apparatus for separately polishing a coin billet and a coining die, comprising: a robotic arm having a holder to which either a coin billet or a coining die can be attached; and a robotic controller configured to operate the robotic arm and comprising a processor and a storage medium containing instructions that when executed by the processor cause the robotic arm to move a coin billet or a coining die attached to the holder within an abrasive medium so as to polish the coin billet or the coining die. The holder may be in accordance with any statement herein. The same apparatus may be capable of polishing both coin billets and coining dies. The apparatus may be provided with one or barrels, drums or containers of abrasive medium. There may be a barrel or drum of fine abrasive medium, and a separate barrel or drum of a coarser abrasive medium.

The coin billets may be polished by moving in the coarse abrasive medium, and the coining dies may be polished by moving in the fine abrasive medium.

According to a further aspect of the invention there is provided a manufacturing plant for manufacturing a coining die, comprising: a machining apparatus for machining a blank billet; a polishing apparatus in accordance with any statement herein; and a pressing apparatus for pressing a polished blank billet with a working punch so as to form a coining die.

The invention may comprise any combination of the features and/or limitations referred to herein, except combinations of such features as are mutually exclusive.

Embodiments of the invention will now be described, by way of example, with reference to the accompanying drawings, in which:
Figure 1 schematically shows a method of manufacturing a coining die;
Figure 2 schematically shows a polishing apparatus;
Figure 3 schematically shows a sectional view of the billet/die holder of Figure 2;
Figure 4 schematically shows a plan view of the billet/die holder of Figure 3; and
Figure 5 schematically shows the billet/die holder of Figures 3 and 4 retaining a billet/die.

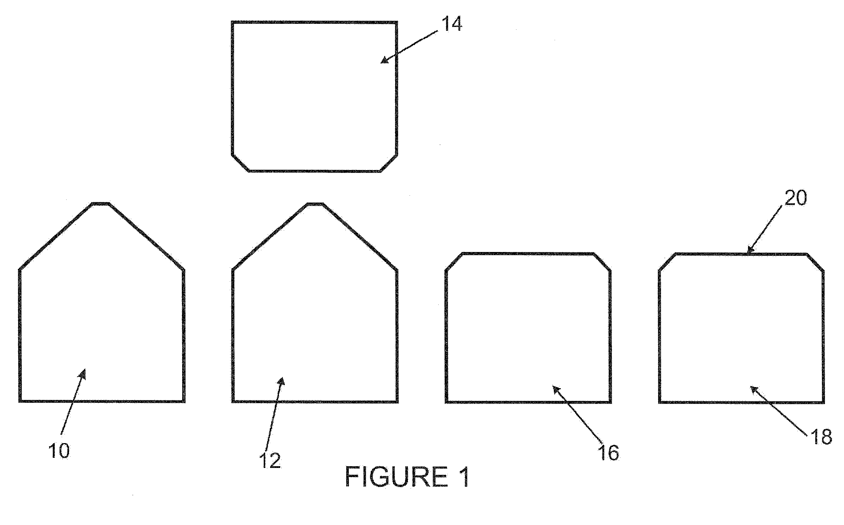

Figure 1 schematically shows a method of manufacturing a coining die in accordance with an embodiment of the invention. A substantially cylindrical blank billet 10 is machined from a block of tool steel and, as will be described in detail below, is polished to form a polished blank billet 12. A wear resistant coating may then be applied to the polished blank billet 12 by a PVD process. The polished blank billet 12 is then pressed with a working punch 14 having a raised image, corresponding to the image that is to be applied to a coin blank, to form a coining die 16 having an inverse image. Following this, and as described in detail below, the coining die 16 is polished to form a polished coining die 18. A wear resistant coating is then applied to the coining die 18 by a PVD process. The coining die 18 can then be used to strike a large number of coins.

Polishing the blank billet 10 and the coining die 16 provides a key for the wear resistant coating which improves the adherence of the wear resistant coating to the die 16. The wear resistant coating applied to the coining die 16 helps to increase the life of the coining die 18.

The working punch 14 itself is formed as follows. A cylindrical billet made from tool steel is CNC machined with a positive image to form a reduction punch. The reduction punch is used to press another cylindrical billet to form a negative matrix punch, which in turn is used to press a cylindrical billet to form the working punch 14. The various billets, the reduction punch and the matrix punch may also be polished.

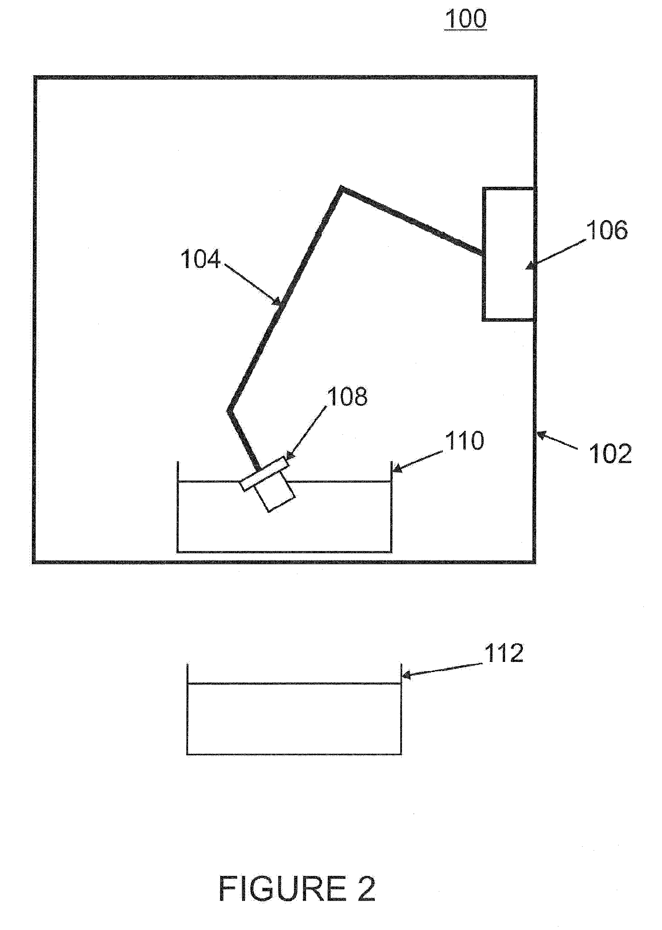

In this embodiment the polishing steps described above are carried out by a polishing machine. With reference to Figure 2, the polishing machine 100 comprises an outer transparent casing 102, an articulated robotic arm 104, a robotic controller 106 and a billet/die holder 108 attached to the distal end of the robotic arm 104. The polishing machine 100 is also provided with a barrel of coarse abrasive media 110, and a barrel of fine abrasive media 112. The robotic controller 106 is configured to control the robotic arm 104 to move a billet/die attached to the holder 108 within a barrel of abrasive media 110, 112 located within the casing 102 so as to polish the billet/die. The barrels of abrasive media 110, 112 are interchangeable and therefore the polishing machine can either perform a coarse polish, or a fine polish. It should be appreciated that in other embodiments a separate polishing machine could be provided for the coarse polish and the fine polish.

The various billets used to manufacture the reduction punch and the matrix punch may also be polished using the above-described polishing machine by moving them in an abrasive media such as a coarse or fine abrasive media. Similarly, the reduction punch and/or the matrix punch may themselves be polished using the above-described polishing machine by movement in an abrasive media such as a coarse or fine abrasive media.

The holder 108 is attached to the end of the robotic arm 104 and is arranged to retain or hold either a blank billet 10 or a coining die 16 to the end of the robotic arm 104.

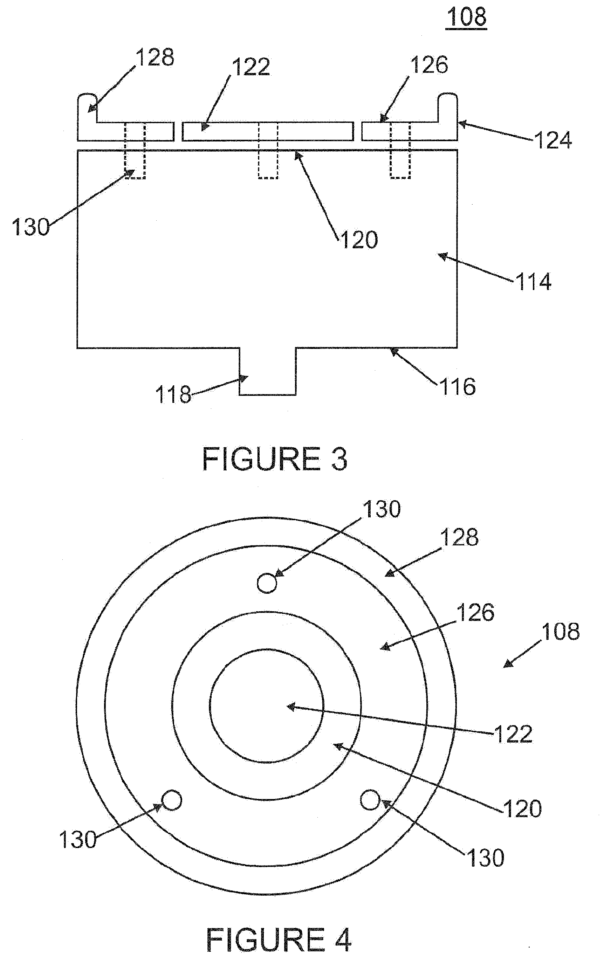

With reference to **Figures 3 and 4****,** the holder 108 comprises a generally cylindrical base 114 that has a diameter larger than the billet or die that it is configured to retain. The lower surface 116 of the base 114 is provided with an axially projecting stub 118 that allows the holder 108 to be attached to the end of a robotic arm 104. A magnetic retainer 122, in the form of a cylindrical permanent magnet, is attached to the upper surface of the base 114.

The holder 108 further comprises a replaceable element 124 in the form of an annular ring. The replaceable element 124 comprises an annular planar surface 126 and an axially extending annular supporting sidewall 128 that is disposed radially outside of the planar surface 126. The replaceable element 124 also comprises a central opening. The replaceable element 124 is made from hardened steel and is detachably attached to the base 114 by three screws or bolts 130 that pass through the planar surface 126 into the base 114. The replaceable element 124 is attached to the base 114 so that it is coaxial with the base 114 and so that the magnet 122 extends through the central opening. The upper surface of the magnet 122 is substantially flush with the annular planar surface 126 of the replaceable element. In this embodiment, the outer diameter of the replaceable element 124 is substantially the same as the outer diameter of the base 114.

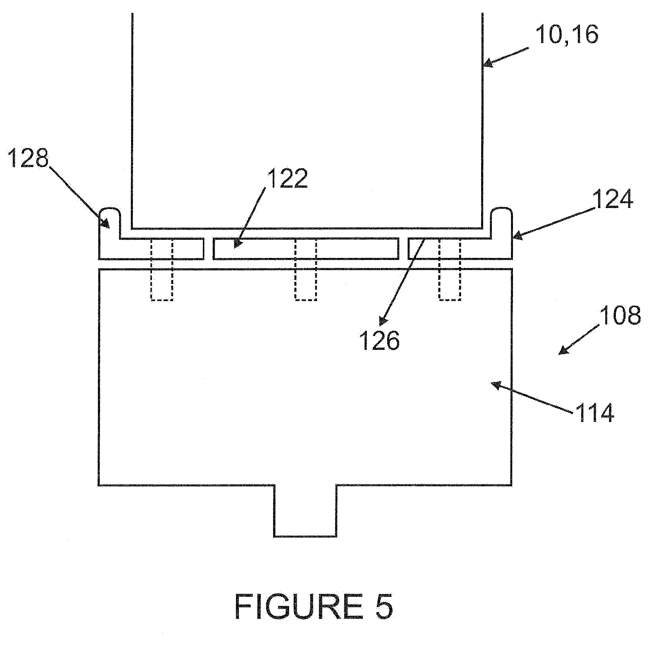

As shown in **Figure 5****,** in use, a substantially cylindrical billet or die 10, 16 is retained to the base 114 of the holder 108 by the magnetic retainer 122. The planar lower surface of the billet/die 10, 16 is held against the annular surface 126 of the replaceable element 124 and the upper surface of the magnet 122, and the circular supporting sidewall 128 completely extends around the outer cylindrical surface of the billet/die 10, 16. The inner diameter of the circular supporting sidewall 128 is slightly larger than the outer diameter of the billet/die 10, 16 and the sidewall 128 axially extends upwards along the outer surface of the billet/die 10, 16. Therefore, the supporting sidewall 128 prevents lateral movement of the billet/die 10, 16 with respect to the base 114 and therefore prevents the billet/die 10, 16 from sliding off the base 114. The magnetic retainer 122 firmly retains the billet/die 10, 16 against the annular surface 126 by virtue of the magnetic holding force that it exerts.

In use, after the blank billet 10 has been machined, it is attached to the robotic arm 104 by means of the holder 108. The billet 10 is retained to the base 114 of the holder 108 by the magnetic retainer 122 and sits against the annular surface 126. The supporting sidewall 128 prevents lateral movement of the billet 10 in all directions. A barrel of coarse abrasive media 110 is then located within the casing 102 and the robotic controller 106 is operated to move the billet 10 within the barrel of coarse abrasive media 110 in a predefined pattern (or path). The movement of the billet 10 within the abrasive medium polishes the billet 10 and the controller 106 is programmed to move the robotic arm 104 such that the billet is uniformly polished. The polished billet 12 is then detached from the holder 108 and is pressed with the working punch 14 to create an incuse image.

The coining die 16 is then attached to the robotic arm 104 by means of the holder 108 and is retained there by the magnetic retainer 122. Again, the supporting sidewall 128 prevents lateral movement of the coining die 16 in all directions. A barrel of fine abrasive media 112 is then located within the casing 102 and the robotic controller 106 is operated to move the coining die 16 within the barrel of fine abrasive media 112 in a predefined pattern (or path). The movement of the coining die 16 within the fine abrasive medium finely polishes the coining die 16 without compromising the incuse image embossed on the stamping surface 20. The controller 106 is programmed to move the robotic arm 104 such that the coining die 16 is uniformly polished. It is important that the working die 16 is not over polished, as the definition of the incuse image may be compromised. The polished coining die 18 is then detached from the holder 108 and is coated with a wear resistant coating using a PVD process. The coining die 18 can then be used to stamp coin blanks.

Although the robotic arm 104 does not itself come into contact with the abrasive medium, the holder 108 may come into contact with the abrasive medium and therefore may become abraded after multiple polishing operations. In particular, the supporting sidewall 128 of the holder 108 may become abraded and reduce in both thickness and height such that it no longer properly restricts a billet or die 10, 16 from lateral movement. This may result in the holder 108 no longer properly retaining a billet/die 10, 16 and therefore a billet/die 10, 16 may become detached during a polishing operation and may fall into the abrasive medium. If this occurs, the replaceable element 124 can be detached from the base 114 by unscrewing it and a new replaceable element 124 can be attached thereto, thereby restoring the supporting sidewall 128. This allows the expensive components of the holder 108, such as the magnetic retainer 122, to be re-used, whilst restoring the intended functionality using a relatively inexpensive component. The replaceable element 124 may therefore be seen as a relatively inexpensive consumable.

Although it has been described that the supporting sidewall 128 is continuous and completely surrounds a billet/die 10, 16, in other embodiments the supporting sidewall 128 may be discontinuous. However, the necessary technical effect is achieved providing that the lateral movement of a billet/die 10, 16 is restricted. It has been described that the replaceable element is a single component, but it should be appreciated that multiple replaceable components, each forming part of the sidewall, could be provided.

It should be appreciated that in other embodiments, the supporting sidewall may be integrally formed with the base.

It should be appreciated that the holder can be used to retain any type of billet, die or punch to the robotic arm of a polishing machine. For example, the holder can be used to retain any billet, a reduction punch, a matrix punch, a working punch, or a coining die.

In the context of this specification, the term "coin" covers any metal disc stamped with an image such as coins, medals, counters, tokens or badges.

## Claims

1. A coin billet or coining die holder (108) for a robotic arm 104 of a polishing machine (100) for polishing a coining die (16) or coin billet (10), the holder comprising:
a base (114);
a magnetic retainer (122) which is arranged to magnetically retain a billet (10) or die (16) to the base; and
a supporting sidewall (128) extending away from the base (114) in an axial direction and arranged to at least partially surround the outer surface of a billet (10) or die (16) retained to the base (114) by the magnetic retainer 122 so as to restrict lateral movement of the billet (10) or die (16) with respect to the base (114);
wherein the supporting sidewall 128 is detachably attached to the base (114).

2. A holder (108) according to claim 1, wherein the supporting sidewall (128) is arranged to completely surround the outer surface of a billet (10) or die (16) retained to the base (114) by the magnetic retainer (122).

3. A holder (108) according to claim 1 or 2, wherein the supporting sidewall (128) forms a closed loop.

4. A holder (108) according to any preceding claim, wherein the supporting sidewall (128) is substantially annular.

5. A holder (108) according to claims 1, 2 or 4, wherein the supporting sidewall (128) is discontinuous.

6. A holder (108) according to any preceding claim, further comprising a retaining surface (126) against which in use a planar surface of the billet or die is retained.

7. A holder (108) according to any preceding claim, further comprising at least one replaceable element (124) comprising the support sidewall (128), wherein the or each replaceable element (124) is detachably attached to the base (114).

8. A holder (108) according to claim 7, wherein the or each replaceable element (124) further comprises a retaining surface (126) against which in use a planar surface of the billet or die is retained.

9. A holder (108) according to claim 7 or 8, wherein the replaceable element (124) comprises a ring having a central opening.

10. A holder (108) according to any preceding claim, wherein the supporting sidewall (128) comprises hardened steel.

11. A holder (108) according to any preceding claim, wherein the magnetic retainer (122) is attached to the base (114).

12. A holder (108) according to any preceding claim, wherein the magnetic retainer (122) is incorporated into the base (114).

13. A holder (108) according to any preceding claim, wherein the magnetic retainer (122) is a permanent or an electromagnet.

14. A holder (108) according to any preceding claim, further comprising an attachment portion (118) for attaching the holder (108) to a robotic arm (104).

15. A polishing apparatus (100) for polishing a coin billet (10) or coining die (16), comprising:
a robotic arm (104);
a holder (108) in accordance with any preceding claim attached to the robotic arm (104); and
a robotic controller (106) configured to operate the robotic arm (104) and comprising a processor and a storage medium containing instructions that when executed by the processor cause the robotic arm (104) to move a coin billet (10) or a coining die (16) attached to the holder within an abrasive medium so as to polish the coin billet (10) or the coining die (16).

## Patentansprüche

1. Münzrohling oder Prägeformhalter (108) für einen Roboterarm (104) einer Poliermaschine (100) zum Polieren einer Prägeform (16) oder eines Münzrohlings (10), wobei der Halter umfasst:
eine Basis (114);
eine Magnetaufnahme (122), die dafür ausgelegt ist, einen Rohling (10) oder eine Prägeform (16) an der Basis magnetisch zu halten; und
eine Stützseitenwand (128), die sich weg von der Basis (114) in einer axialen Richtung erstreckt und dafür ausgelegt ist, zumindest teilweise die Außenfläche eines Rohlings (10) oder einer Prägeform (16) zu umgeben, die an der Basis (114) durch die Magnetaufnahme (122) gehalten wird, um so die seitliche Bewegung des Rohlings (10) oder der Prägeform (16) gegenüber der Basis (114) zu beschränken;
wobei die Stützseitenwand (128) lösbar an der Basis (114) befestigt ist.

2. Halter (108) nach Anspruch 1, wobei die Stützseitenwand (128) dafür ausgelegt ist, die Außenfläche eines Rohlings (10) oder einer Prägeform (16) vollständig zu umgeben, die an der Basis (114) durch den Magnethalter (122) gehalten wird.

3. Halter (108) nach Anspruch 1 oder 2, wobei die Stützseitenwand (128) eine geschlossene Schleife bildet.

4. Halter (108) nach einem der vorherigen Ansprüche, wobei die Stützseitenwand (128) im Wesentlichen ringförmig ist.

5. Halter (108) nach Anspruch 1, 2 oder 4, wobei die Stützseitenwand (128) unterbrochen ist.

6. Halter (108) nach einem der vorherigen Ansprüche, der ferner eine Haltefläche (126) umfasst, gegen die im Gebrauch eine planare Fläche des Rohlings oder der Prägeform gepresst wird.

7. Halter (108) nach einem der vorherigen Ansprüche, der ferner mindestens ein auswechselbares Element (124) umfasst, das die Stützseitenwand (128) umfasst, wobei das oder jedes auswechselbare Element (124) lösbar an der Basis (114) befestigt ist.

8. Halter (108) nach Anspruch 7, wobei das oder jedes auswechselbare Element (124) ferner eine Haltefläche (126) umfasst, gegen die im Gebrauch eine planare Fläche des Rohlings oder der Prägeform gepresst wird.

9. Halter (108) nach Anspruch 7 oder 8, wobei das auswechselbare Element (124) einen Ring umfasst, der eine zentrale Öffnung hat.

10. Halter (108) nach einem der vorherigen Ansprüche, wobei die Stützseitenwand (128) gehärteten Stahl umfasst.

11. Halter (108) nach einem der vorherigen Ansprüche, wobei der Magnethalter (122) an der Basis (114) befestigt ist.

12. Halter (108) nach einem der vorherigen Ansprüche, wobei der Magnethalter (122) in die Basis (114) integriert ist.

13. Halter (108) nach einem der vorherigen Ansprüche, wobei der Magnethalter (122) ein Permanent- oder Elektromagnet ist.

14. Halter (108) nach einem der vorherigen Ansprüche, der ferner einen Befestigungsteil (118) zum Befestigen des Halters (108) an einem Roboterarm (104) umfasst.

15. Poliervorrichtung (100) zum Polieren eines Münzrohlings (10) oder einer Prägeform (16), umfassend:
einen Roboterarm (104);
einen Halter (108) nach einem der vorherigen Ansprüche, der am Roboterarm (104) befestigt ist; und
einen Robotercontroller (106), der dafür ausgelegt ist, den Roboterarm (104) zu betätigen, und der einen Prozessor und ein Speichermedium umfasst, das Instruktionen enthält, die bei Ausführung durch den Prozessor bewirken, dass der Roboterarm (104) einen Münzrohling (10) oder eine Prägeform (16), die am Halter befestigt ist, innerhalb eines Schleifmittels bewegt, um so den Münzrohling (10) oder die Prägeform (16) zu polieren.

## Revendications

1. Support de billette de pièce de monnaie ou de matrice de frappe (108) pour un bras robotisé (104) d'une machine de polissage (100) pour polir une matrice de frappe (16) ou une billette de pièce (10), le support comprenant :
une base (114) ;
un dispositif de maintien magnétique (122) qui est agencé pour maintenir magnétiquement une billette (10) ou une matrice (16) sur la base ; et
une paroi latérale de support (128) s'étendant loin de la base (114) dans une direction axiale et agencée pour entourer au moins partiellement la surface extérieure d'une billette (10) ou d'une matrice (16) maintenue sur la base (114) par le dispositif de maintien magnétique (122) de manière à limiter un déplacement latéral de la billette (10) ou de la matrice (16) par rapport à la base (114) ;
dans lequel la paroi latérale de support (128) est fixée de manière séparable sur la base (114).

2. Support (108) selon la revendication 1, dans lequel la paroi latérale de support (128) est agencée pour entourer entièrement la surface extérieure d'une billette (10) ou d'une matrice (16) maintenue sur la base (114) par le dispositif de maintien magnétique (122).

3. Support (108) selon les revendications 1 ou 2,
dans lequel la paroi latérale de support (128) forme une boucle fermée.

4. Support (108) selon l'une quelconque des revendications précédentes, dans lequel la paroi latérale de support (128) est sensiblement annulaire.

5. Support (108) selon les revendications 1, 2 ou 4,
dans lequel la paroi latérale de support (128) est discontinue.

6. Support (108) selon l'une quelconque des revendications précédentes, comprenant de plus une surface de maintien (126) contre laquelle, en utilisation, une surface plane de la billette ou de la matrice est maintenue.

7. Support (108) selon l'une quelconque des revendications précédentes, comprenant au moins un élément remplaçable (124) comprenant la paroi latérale de support (128), dans lequel l'élément remplaçable ou chaque élément remplaçable (124) est fixé de manière séparable sur la base (114).

8. Support (108) selon la revendication 7, dans lequel l'élément remplaçable ou chaque élément remplaçable (124) comprend de plus une surface de maintien (126) contre laquelle, en utilisation, une surface plane de la billette ou de la matrice est maintenue.

9. Support (108) selon les revendications 7 ou 8,
dans lequel l'élément remplaçable (124) comporte un anneau ayant une ouverture centrale.

10. Support (108) selon l'une quelconque des revendications précédentes, dans lequel la paroi latérale de support (128) est constituée d'acier durci.

11. Support (108) selon l'une quelconque des revendications précédentes, dans lequel le dispositif de maintien magnétique (122) est fixé sur la base (114).

12. Support (108) selon l'une quelconque des revendications précédentes, dans lequel le dispositif de maintien magnétique (122) est incorporé dans la base (114).

13. Support (108) selon l'une quelconque des revendications précédentes, dans lequel le dispositif de maintien magnétique (122) est un aimant permanent ou un électroaimant.

14. Support (108) selon l'une quelconque des revendications précédentes, comprenant de plus une partie de fixation (118) pour fixer le support (108) sur un bras robotisé (104).

15. Dispositif de polissage (100) pour polir une billette de pièce (10) ou une matrice de frappe (16) comprenant :
un bras robotisé (104) ;
un support (108) selon l'une quelconque des revendications précédentes relié au bras robotisé (104) ; et
une commande de robot (106) configurée pour actionner le bras robotisé (104) et comprenant un processeur et un support de mémorisation contenant des instructions qui, lorsqu'elles sont exécutées par le processeur, amènent le bras robotisé (104) à déplacer une billette de pièce (10) ou une matrice de frappe (16) fixée sur le support dans un milieu abrasif de manière à polir la billette de pièce (10) ou la matrice de frappe (16).
